(19) Europäisches Patentamt European Patent Office Office européen des brevets

(11) **EP 4 726 454 A1**

(12) **EUROPEAN PATENT APPLICATION**
published in accordance with Art. 153(4) EPC

(43) Date of publication:
**15.04.2026 Bulletin 2026/16**

(51) International Patent Classification (IPC):
***G02B 13/00*** (2006.01)

(21) Application number: **24902647.7**

(22) Date of filing: **03.12.2024**

(86) International application number:
**PCT/CN2024/136474**

(87) International publication number:
**WO 2025/124226 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.12.2023 CN 202311729435**

(71) Applicant: **Oppo (Guangdong Oppo Mobile Telecommunications Corp., Ltd.)**
**Wusha, Chang'an**
**Dongguan**
**Guangdong 523860 (CN)**

(72) Inventors:
• **WU, Xiangxi**
**Dongguan, Guangdong 523860 (CN)**
• **WEI, Yi**
**Dongguan, Guangdong 523860 (CN)**
• **GAO, Yuchan**
**Dongguan, Guangdong 523860 (CN)**
• **TAN, Yaocheng**
**Dongguan, Guangdong 523860 (CN)**
• **CHEN, Jiawei**
**Dongguan, Guangdong 523860 (CN)**
• **ZHANG, Haiyu**
**Dongguan, Guangdong 523860 (CN)**

(74) Representative: **Grassi, Stefano**
**Bugnion S.p.A.**
**Viale Lancetti, 17**
**20158 Milano (IT)**

(54) **OPTICAL SYSTEM, IMAGING MODULE, AND ELECTRONIC APPARATUS**

(57)    Provided is an optical system (30) including three or four lenses having refractive power. Along an optical axis from an object side to an image side, the optical system (30) sequentially includes: a first lens (L1) having positive refractive power, both an object-side surface and an image-side surface of the first lens (L1) being convex in a paraxial region; a second lens (L2) having refractive power; and a third lens (L3) having refractive power, one of the second lens (L2) and the third lens (L3) having positive refractive power, and the other having negative refractive power. The optical system (30) satisfies the following condition expressions: $0.25 \leq f1/f \leq 0.85$, $0.15 \leq |f2/f| \leq 0.45$, and $0.15 \leq |f3/f| \leq 1.25$, where f1 is a focal length of the first lens (L1), f2 is a focal length of the second lens (L2), and f3 is a focal length of the third lens (L3).

FIG. 2

**Description**

CROSS-REFERENCE OF RELATED APPLICATION

This application claims priority to Chinese Patent Application No. 2023117294355, filed December 14, 2023, and entitled "OPTICAL SYSTEM, IMAGING MODULE, AND ELECTRONIC APPARATUS", the entire disclosure of which is incorporated herein by reference.

TECHNICAL FIELD

The disclosure relates to the field of camera technologies, and particularly to an optical system, a camera module and an electronic device.

BACKGROUND

An increasing number of electronic devices such as smart phones, tablet computers, and e-readers are equipped with camera modules to realize shooting functions. A periscope-type camera module has emerged to make a telephoto design of the camera module adapt to a structural layout of the electronic device and compress the thickness of the electronic device. The periscope-type camera module is provided with optical transmission elements such as prisms to deflect the optical path, thereby reducing the size of the camera module in the thickness direction of the electronic device. However, it is difficult for the existing telephoto camera modules to balance miniaturization and good imaging quality.

SUMMARY

According to various embodiments of the disclosure, an optical system, a camera module and an electronic device are provided.
The optical system includes three or four lenses with refractive power, and along an optical axis from an object side to an image side, the optical system sequentially includes:

a first lens with positive refractive power, where a paraxial region of an object-side surface and a paraxial region of an image-side surface of the first lens are convex;
a second lens with refractive power; and
a third lens with refractive power, where one of the second lens and the third lens has positive refractive power, and the other one of the second lens and the third lens has negative refractive power;
where the optical system satisfies following conditional expressions:

$$0.25 \leq f1/f \leq 0.85;$$

$$0.15 \leq |f2/f| \leq 0.45;$$

and

$$0.15 \leq |f3/f| \leq 1.25;$$

where f1 is a focal length of the first lens, f2 is a focal length of the second lens, and f3 is a focal length of the third lens.

The camera module includes an image sensor, an optical transmission element, and the above optical system.
The optical transmission element has a light-transmitting surface, the light-transmitting surface is provided with a light incident area and a light exiting area, the light incident area is opposite to the optical system, the light exiting area is opposite to the image sensor, the optical transmission element is configured to direct at least part of light incident on the light incident area to exit from the light exiting area after undergoing at least two reflections, and a photosensitive surface of the image sensor is perpendicular to an axis of the optical system.
The electronic device includes the above camera module.

BRIEF DESCRIPTION OF THE DRAWINGS

In order to more clearly illustrate technical solutions in the embodiments of the disclosure or the related art, drawings to be used in the embodiments or the related art are briefly described below. Apparently, the following drawings are merely some embodiments of the disclosure, and those skilled in the art can obtain other drawings according to these drawings without paying any creative effort.

FIG. 1 is a schematic structural diagram of an electronic device according to some embodiments.
FIG. 2 is a schematic diagram illustrating an optical path of a camera module according to some embodiments.
FIG. 3 is a schematic structural diagram of the camera module according to a first embodiment.
FIG. 4 are diagrams illustrating spherical aberration curves, astigmatism curves, and a distortion curve of the camera module according to the first embodiment.
FIG. 5 is a schematic structural diagram of the camera module according to a second embodiment.
FIG. 6 are diagrams illustrating spherical aberration curves, astigmatism curves, and a distortion curve of the camera module according to the second embodiment.
FIG. 7 is a schematic structural diagram of the camera module according to a third embodiment.
FIG. 8 are diagrams illustrating spherical aberration curves, astigmatism curves, and a distortion curve of the camera module according to the third embodiment.
FIG. 9 is a schematic structural diagram of the camera module according to a fourth embodiment.
FIG. 10 are diagrams illustrating spherical aberration curves, astigmatism curves, and a distortion curve diagram of the camera module according to the fourth embodiment.
FIG. 11 is a schematic structural diagram illustrating other components included in the electronic device according to some embodiments.

DETAILED DESCRIPTION OF PREFERRED EMBODIMENTS

The technical scheme in the embodiments of the disclosure will be clearly and comprehensively described below in conjunction with the drawings in the embodiments of the disclosure. Apparently, the described embodiments are only a part of the embodiments of the disclosure, not all of the embodiments. All other embodiments obtained by those skilled in the art based on the embodiments of the present disclosure without creative efforts shall fall within the protection scope of the disclosure.

The "electronic device" used herein includes, but is not limited to, a device capable of receiving and/or transmitting a communication signal via any one or more of the following connection manners:

(1) a connection manner through a wired line, such as connection via a Public Switched Telephone Network (PSTN), a Digital Subscriber Line (DSL), a digital cable, or a direct cable; and
(2) a connection manner through a wireless interface, such as a cellular network, Wireless Local Area Network (WLAN), a digital TV network such as a DVB-H network, a satellite network, or an AM-FM radio transmitter.

An electronic device configured to communicate via a wireless communication interface may be referred to as a "mobile terminal". Examples of the mobile terminal include, but are not limited to, the following electronic devices:

(1) a satellite phone or a cellular phone;
(2) a Personal Communications System (PCS) terminal capable of combining cellular radio telephone with data processing, facsimile, and a data communication capability;
(3) a radio telephone, a pager, an Internet/intranet access, a Web browser, a notepad, a calendar, and a Personal Digital Assistant (PDA) equipped with a Global Positioning System (GPS) receiver;
(4) a conventional laptop and/or palmtop receiver; and
(5) a conventional laptop and/or palmtop radio telephone transceivers.

A conventional periscope-type camera module usually deflects light by using a prism, which shifts an axial dimension of an optical system from a thickness direction of an electronic device to a width direction thereof, to reduce the thickness of the electronic device. Such configuration would make a photosensitive surface of an image sensor to be parallel to the thickness direction of the electronic device, so that the image sensor occupies a space in the thickness direction of the electronic device. However, as the industry has higher and higher requirements for imaging quality of the camera module, the size of the imaging plane is increasing accordingly. The increase in the size of the image sensor would lead to an increase in the thickness of the electronic device. Thus, it is difficult for the conventional periscope-type camera module to achieve both miniaturization and good imaging quality.

In view of this, an optical system, a camera module and an electronic device are provided according to the embodiments of the present disclosure.

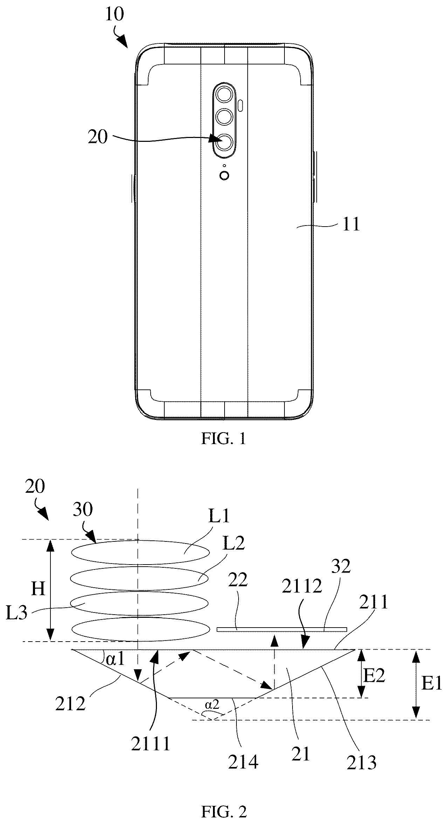

Referring to FIG. 1 and FIG. 2, FIG. 1 is a schematic structural diagram of the electronic device 10 according to some embodiments, and FIG. 2 is a schematic diagram of an optical path of a camera module 20 according to some embodiments. According to the disclosure, the electronic device 10 includes, but is not limited to, a device that is capable of being provided with a camera module 20 to enable a shooting function, such as a smart phone, a tablet computer, an e-reader, and a wearable device. In the embodiments of the disclosure, the electronic device 10 is exemplarily described by taking the smart phone as an example.

In some embodiments, the electronic device 10 includes a housing 11 and a camera module 20. The camera module 20 is arranged at the housing 11. The electronic device 10 is provided with the camera module 20 to realize the shooting function. In some embodiments, the housing 11 includes a middle frame, a display module, and a rear cover. The middle frame may be roughly in a shape of a rectangular frame. The display module and the rear cover may be respectively disposed on two sides of the middle frame, so that an accommodating space is defined by the display module, the back cover and the middle frame. The camera module 20 may be accommodated in the accommodating space of the housing 11. In the disclosure, a direction from the display module of the housing 11 to the rear cover may be regarded as a thickness direction of the electronic device 10.

In some embodiments, the camera module 20 includes an optical system 30 and an image sensor 22. The optical system 30 includes multiple lenses with refractive power. A photosensitive surface of the image sensor 22 may be overlapped with an imaging plane 32 of the optical system 30. Light received by the camera module 20 may be projected onto the image sensor 22 for imaging after being adjusted by the optical system 30. The image sensor 22 includes, but is not limited to, a Charge Coupled Device (CCD) or a Complementary Metal-Oxide Semiconductor Sensor (CMOS Sensor).

Furthermore, in some embodiments, the optical system 30 includes three or four lenses with refractive power. The optical system sequentially includes, along an optical axis from an object side to an image side: a first lens L1 with positive refractive power, a second lens L2 with refractive power, and a third lens L3 with refractive power. One of the second lens L2 and the third lens L3 has positive refractive power, and the other one has negative refractive power. Both an object-side surface and an image-side surface of the first lens L1 are convex in a paraxial region thereof. The optical system 30 further satisfies the conditional expressions: $0.25 \leq f1/f \leq 0.85$; $0.15 \leq |f2/f| \leq 0.45$; and $0.15 \leq |f3/f| \leq 1.25$, where f1 is a focal length of the first lens L1, f2 is a focal length of the second lens L2, and f3 is a focal length of the third lens L3.

In some embodiments, the optical system 30 further includes a fourth lens L4 disposed on the image side of the third lens L3. The fourth lens L4 has positive refractive power, one of an object-side surface and an image-side surface of the fourth lens L4 is convex in the paraxial region, and the other one of the object-side surface and the image-side surface of the fourth lens L4 is concave in the paraxial region. The various lenses in the optical system 30 may be arranged coaxially. The common axis of the various lenses is an axis of the optical system 30. A part of an optical axis of the camera module 20 that is located in the optical system 30 overlaps with the axis of the optical system 30. The light received by the optical system 30 is sequentially adjusted by the first lens L1, the second lens L2, the third lens L3, and the fourth lens L4, and then projected onto the imaging plane 32 of the optical system 30, that is, onto the image sensor 22.

In the above optical system 30, the first lens L1 has positive optical power, and in combination with a biconvex shape at the paraxial region and the design of f1/f, the first lens L1 can have appropriate refractive power to converge incident light. This is conducive to reducing the total length of the optical system 30 without introducing significant aberrations. The cooperation of the positive refractive power and the negative refractive power of the second lens L2 and the second lens L2, in combination with the design of |f2/f| and |f3/f|, enable the second lens L2 and the third lens L3 to gently deflect the light collected by the first lens L1, thereby reducing deflection angles of the light on the second lens L2 and the third lens L3. When the optical system 30 includes four lenses, the cooperation of the second lens L2 and the third lens L3 is also conducive to reducing the deflection angle of the fourth lens L4, which facilitates the correction of aberrations in the edge field of view, thereby improving the imaging quality of the optical system 30. The fourth lens L4 has positive refractive power, and in combination with the design that one of the object-side surface and the image-side surface of the fourth lens L4 is convex and the other one is concave, it is conducive to further converging the light, and reducing the axial dimension of the optical system 30. In addition, this is also conducive to increasing a back focal length of the optical system 30, thereby achieving a telephoto design. Therefore, based on the reasonable design of the refractive power, surface shape, and focal length of each lens, the above optical system 30 when having three or four lenses can balance miniaturization and good imaging quality.

In some embodiments, when the second lens L2 has positive refractive power, both the object-side surface and the image-side surface of the second lens L2 are convex at the paraxial region. When the second lens L2 has negative refractive power, both the object-side surface and the image-side surface of the second lens L2 are concave at the paraxial region. When the third lens L3 has negative refractive power, both the object-side surface and the image-side surface of the third lens L3 are concave at the paraxial region. When the third lens L3 has positive refractive power, the object-side surface of the third lens L3 is convex at the paraxial region. Therefore, by reasonably configuring the refractive power and surface shapes of the second lens L2 and the third lens L3, the degree of light refraction at each surface of the second lens L2 and the third lens L3 can be reduced, the generation of edge aberrations can be suppressed, and thus the imaging quality of the optical system 30 can be improved.

In some embodiments, when the optical system 30 includes the fourth lens L4, the optical system 30 satisfies the conditional expression: $0.9 \leq f4/f \leq 1.2$, where f4 is a focal length of the fourth lens L4. When the above conditional expression is satisfied, in combination with the design of the refractive power and surface shape of the fourth lens L4, the deflection ability of the fourth lens L4 can be reasonably configured, which is not only conducive to reducing the total length of the optical system 30, but also conducive to increasing the back focal length of the optical system 30, thereby realizing the telephoto design.

In some embodiments, the optical system 30 satisfies the conditional expression: $0.145$ mm$^{-1} \leq FNO/f \leq 0.195$ mm$^{-1}$, where FNO is f-number of the optical system 30. When the above conditional expression is satisfied, a ratio of the f-number to the focal length of the optical system 30 can be appropriately configured to enable the optical system 30 to have sufficient light input. As such, the image luminance of the optical system 30 is increased, thereby improving the imaging quality of the optical system 30 in low-light environments.

In some embodiments, the optical system 30 satisfies the conditional expression: $1.3 \leq TTL/f \leq 1.5$, where TTL is a distance on the optical axis from the object-side surface of the first lens L1 to the imaging plane 32 of the optical system 30, that is, TTL refers to a total track length (total optical length) of the optical system 30. When the above conditional expression is satisfied, the ratio of the total track length to the focal length of the optical system 30 can be reasonably configured, which is conducive to balancing the axial dimension of the optical system 30 and the setting of the effective focal length, thereby reducing the axial dimension of the optical system 30 while realizing telephoto characteristics.

In some embodiments, the camera module 20 further includes an optical transmission element 21. The optical transmission element 21 is arranged between the optical system 30 and the image sensor 22 along the optical path. The optical transmission element 21 is configured to direct the light path between the optical system 30 and the image sensor 22, directing the light emitted from the optical system 30 to the image sensor 22 after undergoing at least two reflections. As such, a periscope design is achieved, which is conducive to reducing the size of the camera module 20 in the thickness direction of the electronic device 10.

In some embodiments, the optical transmission element 21 has a light-transmitting surface 211. The light-transmitting surface 211 is provided with a light incident area 2111 and a light exiting area 2112. The light incident area 2111 is opposite to the optical system 30, and the light exiting area 2112 is opposite to the image sensor 22. The optical transmission element 21 is configured to direct at least part of the light incident on the light incident area 2111 (i.e., the light emitted from the optical system 30 and onto the optical transmission element 21) to undergo at least two reflections and then exit from the light exiting area 2112. In other words, the optical transmission element 21 may deflect the optical path by 180°, so that the photosensitive surface of the image sensor 22 is perpendicular to the axis of the optical system 30. As such, an extending direction of the image sensor 22 is changed from the thickness direction of the electronic device 10 to the width or length direction of the electronic device 10, and the axial direction of the optical system 30 is parallel to the thickness direction of the electronic device 10.

Therefore, in the above camera module 20, the optical transmission element 21 is provided to deflect the optical path by 180° so that the photosensitive surface of the image sensor 22 does not occupy the thickness dimension of the electronic device 10. Even if the imaging plane 32 of the optical system 30 is increased and the size of the image sensor 22 is increased, only the dimension of the camera module 20 in the width direction of the electronic device 10 is increased, but the dimension of the electronic device 10 in the thickness direction is not increased. In addition, the dimensions of the optical system 30 and the image sensor 22 at least partially overlap in the axial direction of the optical system 30, thereby achieving a large imaging plane to improve imaging quality while reducing the thickness dimension of the electronic device 10, thus balancing miniaturization and good imaging quality. In addition, although the axial direction of the optical system 30 is parallel to the thickness direction of the electronic device 10, the optical system 30 achieves telephoto effects and good imaging quality by using three or four lenses and the appropriate design of the various lenses, which is beneficial to compressing the axial dimension of the optical system 30 and the thickness dimension of the electronic device 10.

The specific configuration of the optical transmission element 21 is not limited, as long as it can deflect the optical path by 180° to change the extension direction of the image sensor 22 from the thickness direction of the electronic device 10 to the width direction of the electronic device 10. In some embodiments, the optical transmission element 21 further includes a first reflecting surface 212 and a second reflecting surface 213. Both the first reflecting surface 212 and the second reflecting surface 213 are inclined relative to the light-transmitting surface 211, with the first reflecting surface 212 arranged corresponding to the light incident area 2111, and the second reflecting surface 213 arranged corresponding to the light exiting area 2112. At least part of the light entering the optical transmission element 21 from the light incident area 2111 may be projected onto the first reflecting surface 212, and reflected by the first reflecting surface 212 to a side of the light-transmitting surface 211 facing away from the optical system 30, and then reflected by the light-transmitting surface 211 onto the second reflecting surface 213; thereafter, it is reflected by the second reflecting surface 213 to the light exiting area 2112, and exits from the light exiting area 2112 onto the image sensor 22. In other words, the optical transmission element 21 is configured such that light entering the light incident area 2111 is sequentially reflected by the first reflecting surface 212, the light-transmitting surface 211, and the second reflecting surface 213, and then exits from the light exiting area 2112. The light path is folded by three reflections to adapt to the telephoto design of the optical system 30, and the periscope design is used to achieve the telephoto design while compressing the occupied space of the camera module 20.

Inclination angles of the first reflecting surface 212 and the second reflecting surface 213 relative to the light-transmitting surface 211 are not limited, as long as the light can be deflected by 180° after being reflected by the first reflecting surface 212, the second reflecting surface 213, and the light-transmitting surface 211. For example, the included angles between each of the first reflecting surface 212 and the second reflecting surface 213 and the light-transmitting surface 211 may be 25° to 35°, for example, 32.5°.

It can be understood that an end of the first reflecting surface 212 away from the light-transmitting surface 211 may be connected with an end of the second reflecting surface 213 away from the light-transmitting surface 211. As illustrated in FIG. 2, in some embodiments, the effective light entering the optical transmission element 21 does not pass through parts of the first reflecting surface 212 and the second reflecting surface 213 that are away from the light-transmitting surface 211. In view of this, in some embodiments, the optical transmission element 21 further includes a bottom surface 214. The bottom surface 214 is arranged opposite to the light-transmitting surface 211, and it connects the first reflecting surface 212 and the second reflecting surface 213 (that is, the bottom surface 214 is connected between the first reflecting surface 212 and the second reflecting surface 213). By using, as the bottom surface 214, a surface of the optical transmission element 21 formed by cutting off an end of the optical transmission element 21 away from the optical system 30, the dimension of the optical transmission element 21 in the thickness direction of the electronic device 10 can be reduced without affecting light transmission, which is beneficial to reducing the thickness of the electronic device 10.

In some embodiments, the optical system 30 may further include an aperture stop STO disposed on the object-side surface of the first lens L1. The aperture stop STO is configured to constrain an aperture of light. The camera module 20 may further include an infrared filter 31 disposed between the optical transmission element 21 and the imaging plane 32. The infrared filter 31 is configured to filter out interference light of infrared light, thereby preventing the interference light from reaching the imaging plane 32 and affecting normal imaging.

In some embodiments, the camera module 20 satisfies the conditional expression: $0.82 \leq E1/H \leq 1.6$, where E1 is a distance in the axial direction of the optical system 30 between the light-transmitting surface 211 and an intersection line of the first reflecting surface 212 and the second reflecting surface 213 (when the first reflecting surface 212 and the second reflecting surface 213 are directly connected with each other), or E1 is a distance in the axial direction of the optical system 30 between the light-transmitting surface 211 and an intersection line of an extended surface of the first reflecting surface 212 and an extended surface of the second reflecting surface 213 (when the first reflecting surface 212 and the second reflecting surface 213 are connected to the bottom surface 214), and H is a size of the optical system 30 in the axial direction. When the above conditional expression is satisfied, the dimensional design of the optical system 30 and the optical transmission element 21 can be appropriately configured, which is conducive to reducing the dimension of the camera module 20 in the thickness direction of the electronic device 10.

In some embodiments, the camera module 20 satisfies the conditional expression: $0.7 \leq E2/E1 \leq 0.95$, where E2 is a distance in the axial direction of the optical system between the bottom surface 214 and the light-transmitting surface 211, and E1 is the distance in the axial direction of the optical system 30 between the light-transmitting surface 211 and the intersection line of the first reflecting surface 212 and the second reflecting surface 213, or the distance in the axial direction of the optical system 30 between the light-transmitting surface 211 and the intersection line of the extended surface of the first reflecting surface 212 and the extended surface of the second reflecting surface 213. When the above conditional expression is satisfied, the position of the bottom surface 214 on the optical transmission element 21 along the axial direction of the optical system 30 can be appropriately configured, thereby effectively reducing the dimension of the optical transmission element 21 in the thickness direction of the electronic device 10 without affecting light transmission.

In some embodiments, the camera module 20 satisfies the conditional expressions: $0.4 \text{ mm/}° \leq C/\alpha1 \leq 0.5 \text{ mm/}°$, and $3 \leq \alpha2/\alpha1 \leq 4.1$; where C is a thickness of the optical transmission element when being equivalent to a flat glass (that is, a thickness of an equivalent flat glass of the optical transmission element), that is, a length of the optical axis in the optical transmission element 21; $\alpha1$ is an included angle between the light-transmitting surface 211 and the first reflecting surface 212, and $\alpha2$ is an included angle between the first reflecting surface 212 and the second reflecting surface 213. When the above conditional expressions are satisfied, the thickness of the optical transmission element 21 when being equivalent to a flat glass, the included angle between the light-transmitting surface 211 and the first reflecting surface 212, and the included angle between the first reflecting surface 212 and the second reflecting surface 213 can be appropriately configured, so that the light path in the optical transmission element 21 can be appropriately planned. In this way, the light path can be effectively folded, and the space occupied by the optical transmission element 21 can be reduced while adapting to the telephoto design of the optical system 30.

Based on the description of the above embodiments, specific embodiments and drawings are provided below for description in detail.

First embodiment

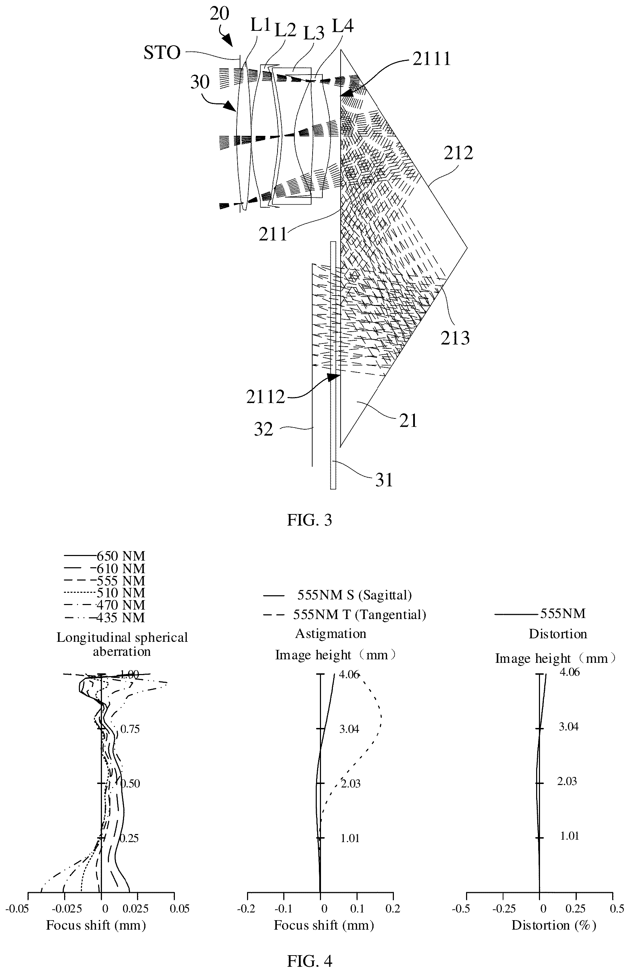

Referring to FIG. 3, FIG. 3 is a schematic structural diagram of the camera module 20 according to the first embodiment. The camera module 20 sequentially includes, from an object side to an image side, an aperture stop STO, a first lens L1 with positive refractive power, a second lens L2 with positive refractive power, a third lens L3 with negative refractive power, a fourth lens L4 with positive refractive power, and an optical transmission element 21. In this embodiment and the following embodiments, the materials of the various lenses and the optical transmission element 21 include, but are not limited to, any applicable materials such as glass or plastic.

A paraxial region of an object-side surface and a paraxial region of an image-side surface of the first lens L1 are convex.

A paraxial region of an object-side surface and a paraxial region of an image-side surface of the second lens L2 are convex.

A paraxial region of an object-side surface and a paraxial region of an image-side surface of the third lens L3 are concave.

A paraxial region of an object-side surface of the fourth lens L4 is concave, and a paraxial region of an image-side surface of the fourth lens L4 is convex.

Various parameters of the camera module 20 in the first embodiment are given in Table 1, in which the various elements from an object plane to an imaging plane 32 are in the order of the various elements from top to bottom in Table 1. Y radius in Table 1 is a radius of curvature of the corresponding object-side surface or image-side surface at the optical axis. In the "thickness" parameter column of the first lens L1, the first value is a thickness of the lens on the optical axis, and the second value is a distance on the optical axis from the image-side surface of the lens to a next surface in a direction towards the image side.

It is notable that, in this embodiment and the following embodiments, the optical system 30 may not be provided with an infrared filter 31 while a distance from the image-side surface of the fourth lens L4 (or the third lens L3) to the imaging plane 32 remains unchanged.

Table 1

| Name | Surface Type | Y Radius (mm) | Thickness (mm) | Decenter | Incline | Refractive Index, Abbe Number | Focal Length (mm) |
|---|---|---|---|---|---|---|---|
| Object Plane | Spherical | Infinite | Infinite | / | / | | |
| Aperture stop | Spherical | Infinite | -0.1357 | / | / | | |
| First lens | Aspherical | 15.5713 | 0.5768 | / | / | 1.67, 19.24 | 10.4482 |
| | Aspherical | -12.7654 | 0.0200 | / | / | | |
| Second Lens | Aspherical | 10.6879 | 1.0733 | / | / | 1.74, 49.25 | 4.5508 |
| | Aspherical | -4.7622 | 0.1438 | / | / | | |
| Third Lens | Aspherical | -4.5812 | 0.4894 | / | / | 1.61, 25.93 | -2.8511 |
| | Aspherical | 2.9872 | 0.7454 | / | / | | |
| Fourth Lens | Aspherical | -13.5150 | 0.6977 | / | / | 1.54, 55.92 | 16.6081 |
| | Aspherical | -5.5238 | 0.5000 | / | / | | |
| Optical transmission element | Spherical | Infinite | 2.5240 | -4.4619 | 0.0000 | 1.57, 56.04 | / |
| | Spherical | Infinite | -2.5240 | -0.5000 | 32.500 0 | | |
| | Spherical | Infinite | 2.5240 | -4.4619 | 0.0000 | | |
| | Spherical | Infinite | -2.5240 | -8.4237 | - 32.500 0 | | |
| | Spherical | Infinite | -0.1900 | -8.4237 | 0.0000 | | |
| Infrared filter | Spherical | Infinite | -0.2100 | -9.1500 | 0.0000 | | Infinite |
| | Spherical | Infinite | -0.6286 | -9.1500 | 0.0000 | | |
| Imaging plane | Spherical | Infinite | 0.0000 | -9.1500 | 0.0000 | | |

In the first embodiment and the following embodiments, both the object-side surfaces and the image-side surfaces of the various lenses in the optical system 30 are aspherical. Aspherical coefficients of the object-side surfaces or the image-side surfaces of the various lenses in the optical system 30 in the first embodiment are given in Table 2. Specifically, surface numbers 1-8 respectively represent the object-side surface of the first lens L1, the image-side surface of the first lens L1, the object-side surface of the second lens L2, the image-side surface of the second lens L2, and so on, up to the image-side surface of the fourth lens L4. In table 2, K to A30 from top to bottom respectively represent the types of aspherical coefficients, where K represents the conic coefficient (cone constant), A4 represents the fourth-order aspherical coefficient, A6 represents the sixth-order aspherical coefficient, A8 represents the eighth-order aspherical coefficient, and so on. In addition, the aspherical coefficient formula is as follows:

$$z = \frac{ch^2}{1 + \sqrt{1 - (k+1)c^2h^2}} + \sum A_i h^i$$

where z is a sagittal depth of a distance from a point of an aspherical surface at a height of h relative to the optical axis to the vertex of the aspherical surface, c is the paraxial curvature of the aspherical surface, c=1/R (that is, the paraxial curvature c is the inverse of the radius of curvature R), k is the conic coefficient, Ai is the i-th order correction coefficient for the aspherical surface.

Table 2

| Surface Number | 1 | 2 | 3 | 4 | 5 | 6 | 7 | 8 |
|---|---|---|---|---|---|---|---|---|
| k | 4.9190 E+00 | 5.9784E-01 | -1.0345E+01 | -1.0888E-01 | 1.1253E-02 | 6.2174E-03 | -9.9000E+01 | -3.6620E+00 |
| A4 | -6.2079 E-02 | 1.5114E-01 | 1.1855E-01 | 4.6582E-01 | 4.4102E-01 | -3.4361E-01 | 4.4091E-02 | 6.3693E-02 |
| A6 | 4.1411 E-03 | -2.8322E-02 | -2.6060E-02 | -7.0532E-02 | -7.7886E-02 | -1.3799E-02 | 1.3349E-02 | 1.8840E-02 |
| A8 | -1.0230 E-03 | 6.6681E-03 | -1.9477E-04 | 1.0212E-02 | 2.4530E-02 | 6.2943E-03 | 6.4385E-03 | 5.2509E-03 |
| A10 | 2.2172 E-03 | -1.3335E-03 | -6.9392E-03 | -7.3203E-03 | -7.2114E-03 | -1.1370E-03 | -5.2716E-06 | -3.7283E-04 |
| A12 | -4.4612 E-04 | 1.3590E-03 | 1.7177E-03 | 3.9893E-03 | 4.4652E-03 | 3.3581E-04 | -4.1688E-04 | -3.0712E-04 |
| A14 | 2.1666 E-04 | -6.7168E-04 | -6.4551E-04 | -6.6238E-04 | -1.1640E-03 | -1.9944E-06 | 8.2290E-05 | -3.3489E-05 |
| A16 | 2.0572 E-05 | 6.5485E-04 | 8.3364E-04 | 5.1250E-04 | 5.1632E-04 | 1.0504E-05 | 3.4617E-05 | 2.7627E-05 |
| A18 | -5.2363 E-05 | -5.7101E-04 | -6.2541E-04 | -9.8936E-04 | -8.5354E-04 | -8.8903E-05 | -3.8757E-05 | 3.2533E-06 |
| A20 | -8.5378 E-05 | 3.7494E-05 | -1.3725E-04 | 9.8044E-05 | 3.4779E-04 | 1.3596E-04 | 7.4666E-05 | 3.3414E-05 |
| A22 | -1.9181 E-05 | -3.9451E-05 | -4.9661E-05 | 1.5188E-05 | -1.0039E-04 | 1.5777E-06 | 3.0927E-05 | 1.6038E-05 |
| A24 | 2.4823 E-05 | 8.0715E-05 | 6.1709E-05 | 1.0072E-05 | 2.0080E-05 | 1.8391E-05 | 2.7468E-05 | 1.3577E-05 |
| A26 | -1.5775 E-05 | -7.3628E-05 | -7.3414E-05 | -3.9258E-05 | -2.7467E-05 | -1.0315E-05 | -8.3615E-06 | -4.9081E-06 |
| A28 | 9.2708 E-06 | 4.8160E-05 | 2.5345E-05 | 3.2500E-05 | 2.6876E-05 | -3.7040E-06 | 5.3991E-07 | -9.6308E-06 |
| A30 | 5.0982 E-09 | -1.0833E-05 | -2.3151E-06 | -4.2321E-06 | -1.2830E-05 | -1.2185E-05 | -1.5451E-05 | -1.0631E-05 |

Referring to FIG. 4, FIG. 4 are diagrams illustrating, from left to right, longitudinal spherical aberration curves, astigmatism curves, and a distortion curve of the camera module 20 according to the first embodiment. The longitudinal spherical aberration curves represent the deviations of the focus point after the light with different wavelengths travels through the lens, in which the ordinate represents the normalized pupil coordinator from the center of the pupil to the edge of the pupil, and the abscissa represents the focus shift, that is, the distance between the imaging plane 32 and the intersection of the light and the optical axis (unit: mm). As can be seen from the longitudinal spherical aberration curves that, in the first embodiment, the deviations of the focus point of the light with various wavelengths are almost the same. Thus, the diffuse spots or chromatic halos in the images are effectively suppressed. As can be seen from the astigmatism curves (ASTIGMATIC FIELD CURVES), the abscissa represents the focus shift in mm, and the ordinate represents the image height in mm. It can be seen from the astigmatism curves that the field curvature of the camera module 20 is small, the field curvature and astigmatism of each field of view are well corrected, and both the central and marginal fields can be clearly imaged. The distortion curve (DISTORTION) represents the magnitude of the distortion under different field of views, in which the abscissa represents the distortion in %, and the ordinate represents the image height in mm. It can be seen from the curve that the distortion of the image caused by the chief rays is small, and the imaging quality of the camera module 20 is excellent.

Second embodiment

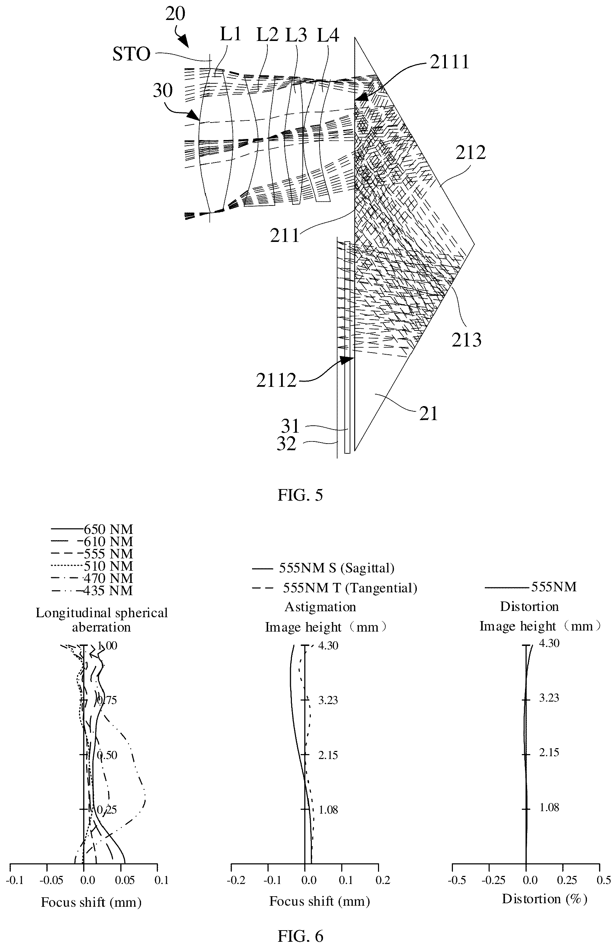

Referring to FIG. 5, FIG. 5 is a schematic structural diagram of the camera module 20 according to the second embodiment. The camera module 20 sequentially includes, from an object side to an image side, an aperture stop STO, a first lens L1 with positive refractive power, a second lens L2 with negative refractive power, a third lens L3 with positive refractive power, a fourth lens L4 with positive refractive power, and an optical transmission element 21.

A paraxial region of an object-side surface and a paraxial region of an image-side surface of the first lens L1 are convex.

A paraxial region of an object-side surface and a paraxial region of an image-side surface of the second lens L2 are concave.

A paraxial region of an object-side surface of the third lens L3 is convex, and a paraxial region of an image-side surface of the third lens L3 is concave.

A paraxial region of an object-side surface of the fourth lens L4 is convex, and a paraxial region of an image-side surface of the fourth lens L4 is concave.

Various parameters of the camera module 20 in the second embodiment are given in Table 3, and the meaning of the various parameters may refer to the first embodiment.

Table 3

| Name | Surface Type | Y Radius (mm) | Thickness (mm) | Decenter | Incline | Refractive Index, Abbe Number | Focal Length (mm) |
|---|---|---|---|---|---|---|---|
| Object Plane | Spherical | Infinite | Infinite | / | / | | |
| Aperture stop | Spherical | Infinite | -0.4331 | / | / | | |
| First lens | Aspherical | 8.5064 | 1.3720 | / | / | 1.61, 25.93 | 6.1918 |
| | Aspherical | -6.5439 | 1.0203 | / | / | | |
| Second Lens | Aspherical | -3.2712 | 0.4291 | / | / | 1.66, 20.37 | - 3.1752 |
| | Aspherical | 6.3094 | 0.6405 | / | / | | |
| Third Lens | Aspherical | 4.3280 | 0.7417 | / | / | 1.54, 55.92 | 9.4614 |
| | Aspherical | 25.1429 | 0.0200 | / | / | | |
| Fourth Lens | Aspherical | 4.2007 | 0.6437 | / | / | 1.67, 19.24 | 13.9655 |
| | Aspherical | 7.0923 | 1.4288 | / | / | | |

(continued)

| Name | Surface Type | Y Radius (mm) | Thickness (mm) | Decenter | Incline | Refractive Index, Abbe Number | Focal Length (mm) |
|---|---|---|---|---|---|---|---|
| Optical transmissio n element | Spherical | Infinite | 2.4249 | 4.2000 | 0.0000 | 1.57, 42.81 | / |
| | Spherical | Infinite | -2.4249 | 0.0000 | -30.0000 | | |
| | Spherical | Infinite | 2.4249 | 4.2000 | 0.0000 | | |
| | Spherical | Infinite | -2.4249 | 8.4000 | 30.0000 | | |
| | Spherical | Infinite | -0.1900 | 8.4000 | 0.0000 | | |
| Infrared filter | Spherical | Infinite | -0.2100 | 8.4000 | 0.0000 | | Infinite |
| | Spherical | Infinite | -0.3035 | 8.4000 | 0.0000 | | |
| Imaging plane | Spherical | Infinite | 0.0000 | 8.4000 | 0.0000 | | |

The aspherical coefficients of the object-side surface or image-side surface of each lens in the optical system 30 in the second embodiment are given in Table 4, and the meaning of the various parameters may refer to the first embodiment.

Table 4

| Surface Number | 1 | 2 | 3 | 4 | 5 | 6 | 7 | 8 |
|---|---|---|---|---|---|---|---|---|
| k | -4.1857E-01 | -8.1304E-01 | 1.9286E-03 | -3.9032E-01 | -2.3835E-01 | -3.5724E+00 | -1.2971E-01 | -1.0562E+01 |
| A4 | -5.8297E-02 | 2.3279E-01 | 8.3954E-01 | -3.2657E-01 | -5.5855E-01 | -2.9411E-01 | -2.6398E-01 | 1.3808E-01 |
| A6 | -3.4531E-03 | -2.4133E-02 | -4.9605E-02 | 2.6506E-02 | 6.8099E-02 | 5.6207E-02 | -1.0751E-02 | -4.2797E-02 |
| A8 | 2.0762E-03 | 7.3882E-03 | 1.8747E-02 | -8.9485E-03 | -1.6407E-02 | -2.0362E-02 | -1.0997E-02 | 2.9873E-03 |
| A10 | 1.0214E-03 | 1.1763E-05 | -3.5120E-03 | 2.2105E-03 | 6.7868E-03 | 1.1625E-02 | 5.4874E-03 | -5.1502E-04 |
| A12 | 3.0059E-05 | -1.2071E-04 | -2.5148E-04 | -3.2852E-03 | -4.2782E-03 | -5.6118E-03 | -2.0009E-03 | 6.9179E-04 |
| A14 | -1.8953E-05 | 7.6455E-05 | 1.0326E-03 | 2.3056E-03 | 1.3142E-03 | 2.4676E-03 | 1.4446E-03 | -1.2831E-04 |
| A16 | 2.6198E-05 | 2.5730E-05 | -5.9829E-04 | -9.3241E-04 | 2.3572E-05 | -1.0151E-03 | -8.7559E-04 | -5.5091E-05 |
| A18 | 1.2087E-06 | -1.3238E-05 | 2.8643E-04 | 3.6154E-04 | -1.7085E-04 | 4.5534E-04 | 4.2073E-04 | 4.2359E-05 |
| A20 | -3.0554E-07 | 5.7239E-06 | -7.1504E-05 | -3.0303E-05 | 1.9704E-04 | -1.6091E-04 | -1.7042E-04 | -1.3284E-05 |
| A22 | 0.0000E+00 | 0.0000E+00 | 4.1766E-05 | 3.4448E-05 | 4.1249E-05 | 1.3980E-04 | 3.5785E-05 | -1.5619E-05 |
| A24 | 0.0000E+00 | 0.0000E+00 | 0.0000E+00 | 1.5421E-05 | 8.1946E-05 | 4.6727E-05 | 1.8062E-05 | 1.1133E-05 |
| A26 | 0.0000E+00 | 0.0000E+00 | 0.0000E+00 | 0.0000E+00 | 6.7580E-06 | -1.0253E-06 | -1.1607E-05 | -7.4858E-06 |

(continued)

| Surface Number | 1 | 2 | 3 | 4 | 5 | 6 | 7 | 8 |
|---|---|---|---|---|---|---|---|---|
| A28 | 0.0000E+00 | 0.0000E+00 | 0.0000E+00 | 0.0000E+00 | 0.0000E+00 | 1.0028E-05 | 0.0000E+00 | 0.0000E +00 |
| A30 | 0.0000E+00 | 0.0000E+00 | 0.0000E+00 | 0.0000E+00 | 0.0000E+00 | 5.9595E-07 | 0.0000E+00 | 0.0000E +00 |

Referring to FIG. 6, FIG. 6 are diagrams illustrating, from left to right, longitudinal spherical aberration curves, astigmatism curves, and a distortion curve of the camera module 20 according to the second embodiment. It can be seen from FIG. 6 that the longitudinal spherical aberration, astigmatism, and distortion of the camera module 20 are all well controlled, so that the camera module 20 according to the embodiment has good imaging quality.

Third embodiment

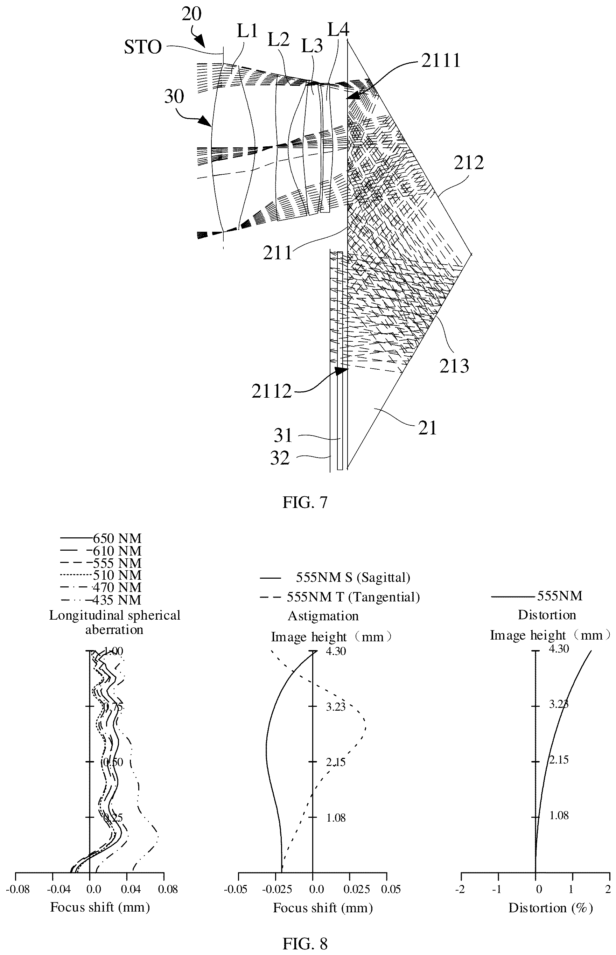

Referring to FIG. 7, FIG. 7 is a schematic structural diagram of the camera module 20 according to the third embodiment. The camera module 20 sequentially includes, from an object side to an image side, an aperture stop STO, a first lens L1 with positive refractive power, a second lens L2 with negative refractive power, a third lens L3 with positive refractive power, a fourth lens L4 with positive refractive power, and an optical transmission element 21.
A paraxial region of an object-side surface and a paraxial region of an image-side surface of the first lens L1 are convex.
A paraxial region of an object-side surface and a paraxial region of an image-side surface of the second lens L2 are concave.
A paraxial region of an object-side surface of the third lens L3 is convex, and a paraxial region of an image-side surface of the third lens L3 is concave.
A paraxial region of an object-side surface of the fourth lens L4 is concave, and a paraxial region of an image-side surface of the fourth lens L4 is convex.
Various parameters of the camera module 20 in the third embodiment are given in Table 5, and the meaning of the various parameters may refer to the first embodiment.

Table 5

| Name | Surface Type | Y Radius (mm) | Thickness (mm) | Decenter | Incline | Material | Focal Length (mm) |
|---|---|---|---|---|---|---|---|
| Object Plane | Spherical | Infinite | Infinite | / | / | | |
| Aperture stop | Spherical | Infinite | -0.4726 | / | / | | |
| First lens | Aspherical | 10.2220 | 1.7142 | / | / | 1.58, 31.29 | 4.7015 |
| | Aspherical | -3.5925 | 0.8719 | / | / | | |
| Second Lens | Aspherical | -5.0482 | 0.4286 | / | / | 1.64, 21.06 | -3.0864 |
| | Aspherical | 3.4390 | 0.5801 | / | / | | |
| Third Lens | Aspherical | 5.1245 | 0.6997 | / | / | 1.54, 56.00 | 16.7125 |
| | Aspherical | 11.1123 | 0.1017 | / | / | | |
| Fourth Lens | Aspherical | -39.2414 | 0.3737 | / | / | 1.64, 21.07 | 15.9687 |
| | Aspherical | -8.2729 | 0.5802 | / | / | | |
| Optical transmission element | Spherical | Infinite | 2.4537 | -4.2000 | 0.0000 | 1.57, 42.81 | / |
| | Spherical | Infinite | -2.4537 | 0.0000 | 30.0000 | | |
| | Spherical | Infinite | 2.4537 | -4.2000 | 0.0000 | | |
| | Spherical | Infinite | -2.4537 | -8.4000 | -30.0000 | | |
| | Spherical | Infinite | -0.1900 | -8.4000 | 0.0000 | | |

(continued)

| Name | Surface Type | Y Radius (mm) | Thickness (mm) | Decenter | Incline | Material | Focal Length (mm) |
|---|---|---|---|---|---|---|---|
| Infrared filter | Spherical | Infinite | -0.2100 | -8.4000 | 0.0000 | | Infinite |
| | Spherical | Infinite | -0.3999 | -8.4000 | 0.0000 | | |
| Imaging plane | Spherical | Infinite | 0.0000 | -8.4000 | 0.0000 | | |

The aspherical coefficients of the object-side surface or image-side surface of each lens in the optical system 30 in the third embodiment are given in Table 6, and the meaning of the various parameters may refer to the first embodiment.

Table 6

| Surface number | 1 | 2 | 3 | 4 | 5 | 6 | 7 | 8 |
|---|---|---|---|---|---|---|---|---|
| k | -1.3896E+0 0 | 0.0000E+00 | 1.7993E-01 | -2.8414E-02 | -6.4866E-01 | -1.4249E+00 | -1.8826E+01 | 7.4754E-03 |
| A4 | -8.7089E-02 | 1.3590E+00 | 1.0915E+00 | -4.6693E-01 | -5.7270E-01 | -4.9866E-01 | -1.2029E-02 | 2.8444E-01 |
| A6 | 2.4100E-02 | -4.3592E-02 | -2.0060E-01 | -7.1333E-02 | 1.2827E-01 | 9.3358E-02 | -2.5825E-02 | -2.1388E-02 |
| A8 | 9.0004E-03 | 5.4198E-02 | 6.9325E-02 | 1.5401E-02 | -2.6128E-02 | -2.1254E-02 | -3.8326E-03 | 5.3991E-03 |
| A10 | 2.8846E-03 | -2.3170E-03 | -2.4099E-02 | -2.8311E-03 | 2.2369E-02 | 1.5044E-02 | -4.5658E-04 | -3.3830E-03 |
| A12 | 3.1975E-04 | 4.2004E-03 | 8.5149E-03 | 9.7712E-04 | -6.3626E-03 | -2.2802E-03 | 3.3601E-03 | 2.3919E-03 |
| A14 | 2.0885E-04 | -8.0775E-06 | -2.2628E-03 | 1.2421E-03 | 3.2446E-03 | 1.3978E-03 | -3.6146E-04 | -2.9136E-04 |
| A16 | 2.2280E-05 | 3.7442E-04 | 5.8289E-04 | -1.1711E-03 | -1.4547E-03 | 1.7470E-05 | 4.7200E-04 | 9.6483E-05 |
| A18 | 1.3306E-05 | 3.1965E-05 | -1.2865E-05 | 4.1499E-04 | 2.3962E-05 | -8.4078E-04 | -7.4621E-04 | -1.4130E-04 |
| A20 | 4.0323E-06 | 5.1322E-05 | -2.2678E-05 | 6.8178E-06 | 3.2214E-04 | 4.5189E-05 | 2.6562E-05 | -2.8531E-05 |
| A22 | -5.8448E-06 | -1.1203E-05 | 5.1053E-05 | 5.1276E-04 | 6.7718E-04 | 2.1903E-04 | 1.3444E-04 | 3.7322E-05 |
| A24 | 4.3561E-06 | 1.3602E-05 | 3.2479E-07 | 2.9559E-04 | 5.7817E-04 | 5.7935E-04 | 3.7501E-04 | 5.2611E-05 |
| A26 | -2.1805E-06 | -8.0277E-06 | -1.0574E-05 | 2.4407E-05 | -1.2344E-05 | -1.6086E-04 | -1.7268E-04 | -2.5878E-05 |
| A28 | 1.2599E-06 | 1.2411E-05 | -6.6541E-06 | -6.2404E-05 | -1.1794E-04 | -1.3604E-05 | -2.1656E-05 | 7.9624E-06 |
| A30 | 1.0194E-06 | 4.2381E-06 | 2.0370E-06 | -4.3132E-05 | -7.1484E-05 | -2.9087E-05 | -2.9891E-05 | -1.0768E-05 |

Referring to FIG. 8, FIG. 8 are diagrams illustrating, from left to right, longitudinal spherical aberration curves, astigmatism curves, and a distortion curve of the camera module 20 according to the third embodiment. It can be seen from FIG. 8 that the longitudinal spherical aberration, astigmatism, and distortion of the camera module 20 are all well controlled, so that the camera module 20 according to the embodiment has good imaging quality.

Fourth embodiment

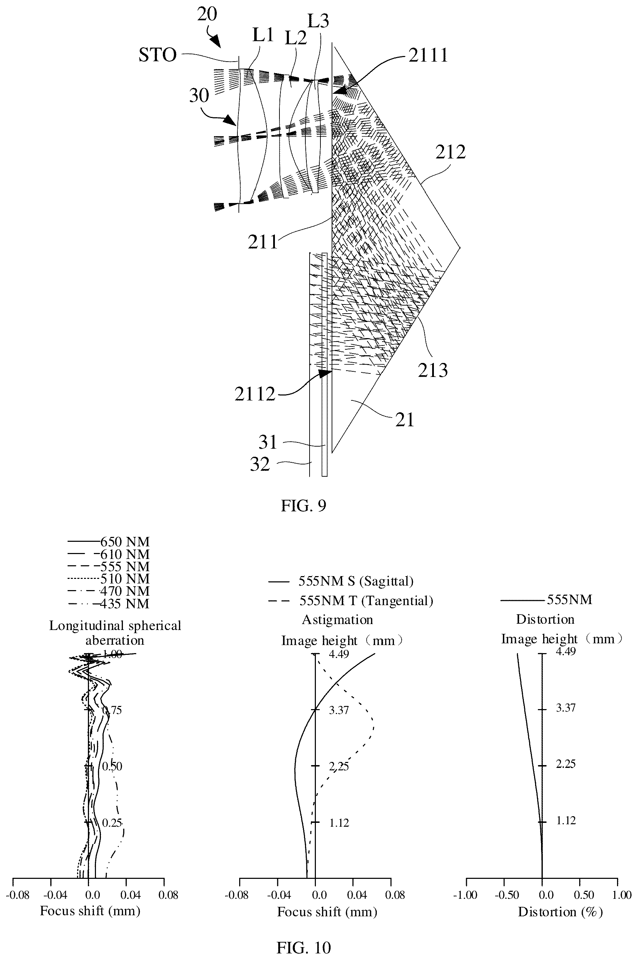

Referring to FIG. 9, FIG. 9 is a schematic structural diagram of a camera module 20 according to the fourth embodiment. The camera module 20 sequentially includes, from an object side to an image side, an aperture stop STO, a first lens L1 with positive refractive power, a second lens L2 with negative refractive power, a third lens L3 with positive refractive power, and an optical transmission element 21.

A paraxial region of an object-side surface and a paraxial region of an image-side surface of the first lens L1 are convex.

A paraxial region of an object-side surface and a paraxial region of an image-side surface of the second lens L2 are concave.

A paraxial region of an object-side surface and a paraxial region of an image-side surface of the third lens L3 are convex.

Various parameters of the camera module 20 in the fourth embodiment are given in Table 7, and the meaning of the various parameters may refer to the first embodiment.

Table 7

| Surface Name | Surface Type | Y Radius (mm) | Thickness (mm) | Decenter | Incline | Material | Focal Length (mm) |
|---|---|---|---|---|---|---|---|
| Object plane | Spherical | Infinite | Infinite | / | / | | |
| Aperture stop | Spherical | Infinite | -0.0518 | / | / | | |
| First lens | Aspherical | 10.0140 | 1.1815 | / | / | 1.60, 27.41 | 3.9650 |
| | Aspherical | -3.0541 | 0.4990 | / | / | | |
| Second lens | Aspherical | -69.9475 | 0.3768 | / | / | 1.64, 21.65 | -2.7981 |
| | Aspherical | 1.8710 | 0.6604 | / | / | | |
| Third lens | Aspherical | 11.3623 | 0.6123 | / | / | 1.74, 43.60 | 7.9408 |
| | Aspherical | -12.1447 | 0.4612 | / | / | | |
| Optical transmission element | Spherical | Infinite | 2.5660 | -4.1321 | 0.0000 | 1.64, 48.22 | / |
| | Spherical | Infinite | -2.5660 | 0.0000 | 31.8400 | | |
| | Spherical | Infinite | 2.5660 | -4.1321 | 0.0000 | | |
| | Spherical | Infinite | -2.5660 | -8.2642 | -31.8400 | | |
| | Spherical | Infinite | -0.1900 | -4.1321 | 0.0000 | | |
| Infrared filter | Spherical | Infinite | -0.2100 | -9.2000 | 0.0000 | | Infinite |
| | Spherical | Infinite | -0.5000 | -9.2000 | 0.0000 | | |
| Imaging plane | Spherical | Infinite | 0.0000 | -9.2000 | 0.0000 | | |

The aspherical coefficients of the object-side surface or image-side surface of each lens in the optical system 30 in the fourth embodiment are given in Table 8, and the meaning of the various parameters may refer to the first embodiment.

Table 8

| Surface Number | 1 | 2 | 3 | 4 | 5 | 6 |
|---|---|---|---|---|---|---|
| k | 0.0000E+0 0 | -1.3526E-03 | 7.2238E+00 | -9.9796E-01 | 7.0104E-01 | 0.0000E+00 |
| A4 | -2.8120E-01 | 9.6940E-01 | 2.1138E-01 | -5.2268E-01 | 4.1168E-02 | 1.0254E-01 |
| A6 | 3.6769E-03 | -5.1578E-02 | -3.2124E-03 | 9.1570E-02 | 3.4056E-02 | 2.1640E-02 |
| A8 | -7.1174E-04 | 3.2040E-02 | -3.6992E-03 | -2.5671E-02 | -1.7316E-03 | 2.3789E-03 |
| A10 | 4.3705E-04 | -2.7907E-03 | 4.6238E-03 | 7.3353E-03 | -6.7762E-04 | -7.2489E-04 |

(continued)

| Surface Number | 1 | 2 | 3 | 4 | 5 | 6 |
|---|---|---|---|---|---|---|
| A12 | 4.4125E-05 | 2.3560E-03 | -2.9432E-03 | -6.2043E-03 | -2.9489E-03 | -1.4695E-03 |
| A14 | -5.0638E-05 | -2.9331E-04 | 1.7571E-03 | 1.2023E-03 | -9.7881E-04 | -6.2709E-04 |
| A16 | 5.5036E-05 | 3.2548E-04 | -8.1288E-04 | -1.0734E-03 | -3.5460E-04 | -1.2335E-04 |
| A18 | 3.3028E-07 | -6.4198E-05 | 2.5483E-04 | -7.3460E-05 | -4.2052E-04 | -1.3730E-04 |
| A20 | 1.5033E-05 | 5.2665E-05 | -1.3100E-04 | -2.1213E-04 | -1.8974E-04 | -7.0154E-06 |
| A22 | 2.9750E-06 | -1.8175E-05 | 6.3208E-05 | 2.1155E-05 | -7.0710E-05 | 2.7953E-05 |
| A24 | -1.4611E-06 | 5.4641E-06 | -3.0553E-05 | -3.7479E-05 | -1.4005E-06 | 3.5714E-05 |
| A26 | -4.7206E-06 | -3.7555E-06 | 1.9828E-05 | -3.3515E-05 | -3.9757E-05 | -1.2729E-05 |
| A28 | 9.1648E-06 | 1.4134E-05 | -1.9233E-06 | -6.2532E-05 | -4.9418E-05 | -2.6980E-05 |
| A30 | -4.4042E-06 | -2.8249E-06 | 2.0126E-05 | -2.1911E-05 | -3.5233E-05 | -1.8622E-05 |

Referring to FIG. 10, FIG. 10 are diagrams illustrating, from left to right, longitudinal spherical aberration curves, astigmatism curves, and a distortion curve of the camera module 20 according to the fourth embodiment. It can be seen from FIG. 10 that the longitudinal spherical aberration, astigmatism, and distortion of the camera module 20 are all well controlled, so that the camera module 20 according to the embodiment has good imaging quality.

In some embodiments, the camera module 20 further satisfies the data in Table 9, where FOV is the maximum field of view of the camera module 20. The other conditional expressions and the effects obtained by satisfying the following data can be referred to the above descriptions and will not be repeated here.

Table 9

| Conditional Expression | First Embodiment | Second Embodiment | Third Embodiment | Fourth Embodiment |
|---|---|---|---|---|
| (mm) | 13.9 | 15 | 15 | 13.2 |
| TTL (mm) | 19.64 | 21.12 | 20.7 | 19.5 |
| FOV (°) | 32.5 | 30.3 | 29.8 | 34.2 |
| FNO | 2.58 | 2.56 | 2.26 | 2.45 |
| f1/f | 0.752 | 0.413 | 0.313 | 0.300 |
| \|f2/f\| | 0.327 | 0.212 | 0.206 | 0.212 |
| \|f3/f\| | 0.205 | 0.631 | 1.114 | 0.602 |
| \|f4/f\| | 1.195 | 0.931 | 1.065 | |
| FNO/f (mm$^{-1}$) | 0.186 | 0.171 | 0.151 | 0.186 |
| TTL/f | 1.413 | 1.408 | 1.38 | 1.477 |
| E1 (mm) | 4.2 | 4.85 | 4.85 | 5.132 |
| E2 (mm) | 3.75 | 3.96 | 3.98 | 3.86 |
| E1/H | 1.121 | 0.916 | 1.103 | 1.541 |
| E2/E1 | 0.892 | 0.816 | 0.82 | 0.752 |
| C (mm) | 14.362 | 14.549 | 14.549 | 14.815 |
| $\alpha$1 (°) | 32.5 | 30 | 30 | 31.84 |
| $\alpha$2 (°) | 115 | 120 | 120 | 116.32 |
| C/$\alpha$1 (mm/°) | 0.442 | 0.485 | 0.485 | 0.465 |
| $\alpha$2/$\alpha$1 | 3.539 | 4 | 4 | 3.653 |

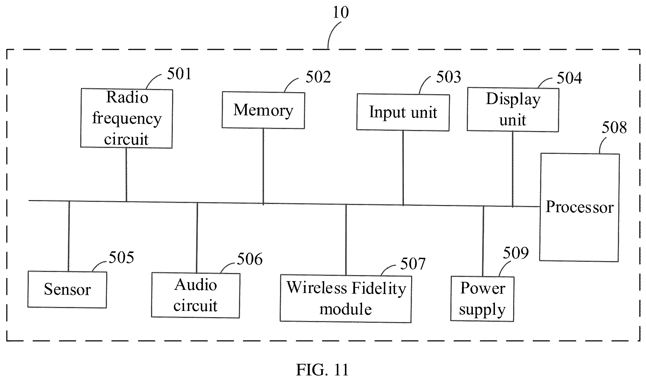

As illustrated in FIG. 11, FIG. 11 is a schematic structural diagram of an electronic device 10 according to some embodiments of the disclosure. The electronic device 10 may include a radio frequency (RF) circuit 501, a memory 502 with one or more computer-readable storage media, an input unit 503, a display unit 504, a sensor 505, an audio circuit 506, a wireless fidelity (Wi-Fi) module 507, a processor 508 with one or more processing cores, a power supply 509, etc. Those skilled in the art should understand that the structure of the electronic device 10 illustrated in FIG. 10 does not limit the structure of the electronic device 10. Regarding the electronic device 10, more or fewer components than the illustrated components may be included, or some components may be combined, or different component arrangements may be used.

The RF circuit 501 may be configured to receive and transmit information or a signal during a call. In particular, after receiving downlink information from a base station, the RF circuit 501 transmits the information to one or more processors 508 for processing. Additionally, the RF circuit 501 transmits data related to the uplink to the base station. Generally, the RF circuit 501 includes, but is not limited to, an antenna, at least one amplifier, a tuner, one or more oscillators, a Subscriber Identity Module (SIM) card, a transceiver, a coupler, a Low Noise Amplifier (LNA), a duplexer, etc. Furthermore, the RF circuit 501 may communicate with networks and other devices via wireless communication. The wireless communication may use any communication standard or protocol, including but not limited to the Global System for Mobile Communications (GSM), General Packet Radio Service (GPRS), Code Division Multiple Access (CDMA), Wideband Code Division Multiple Access (WCDMA), Long Term Evolution (LTE), email, Short Message Service (SMS), etc.

The memory 502 may be configured to store applications and data. The application stored in the memory 502 includes executable codes. The application may be composed of various functional modules. The processor 508 executes various functional applications and data processing by running the application stored in the memory 502. The memory 502 may primarily include a program storage area and a data storage area. The program storage area may store an operating system and at least one application required for a function (such as audio playback, and image playback). The data storage area may store data created during the use of the electronic device 10 (such as audio data, and contacts). Additionally, the memory 502 may include a highspeed random access memory and a non-volatile memory, such as at least one of a disk storage device, a flash memory, or other volatile solid-state storage devices. Accordingly, the memory 502 may include a memory controller, so as to provide access to the memory 502 for the processor 508 and the input unit 503.

The input unit 503 may be configured to receive an input digital, character information or user feature information (such as fingerprints), and generate an input of keyboard, mouse, joystick, optical or trackball signal that is related to user settings and function control. Specifically, in a specific example, the input unit 503 may include a touch-sensitive surface and other input devices. The touch-sensitive surface, also known as a touch display screen or a touch pad, may collect user touch operations on or near it (such as operations performed by the user using a finger, a touchpen, or any other suitable objects or accessories on or near the touch-sensitive surface), and drive a corresponding connection device according to a pre-set program. In some alternative implementations, the touch-sensitive surface may include a touch detection device and a touch controller. Specifically, the touch detection device detects the user's touch orientation, detects the signal generated by the touch operation, and transmits the signal to the touch controller. The touch controller receives the touch information from the touch detection device, converts the touch information into touch point coordinates, and then sends the touch point coordinates to the processor 508. In addition, the touch detection device may receive and execute commands from the processor 508.

The display unit 504 may be configured to display information input by the user or provided to the user, as well as various graphical user interfaces of the electronic device 100. These graphical user interfaces may include graphics, text, icons, videos, or any combination thereof. The display unit 504 may include a display panel. In some alternative implementations, the display panel may be configured in the form of a liquid crystal display (LCD), an organic light-emitting diode (OLED), etc. Furthermore, the touch-sensitive surface may cover the display panel. When detecting a touch operation on or near the touch-sensitive surface, the touch operation is sent to the processor 508 to determine the type of touch event, and then the processor 508 provides corresponding visual output on the display panel according to the type of touch event. Although as illustrated in FIG. 11, the touch-sensitive surface and the display panel are implemented as two independent components to achieve input and output functions, in some embodiments, the touch-sensitive surface may be integrated with the display panel to achieve input and output functions. It can be understood that the display screen 110 may include an input unit 503 and a display unit 504.

The electronic device 100 may further include at least one sensor 505, such as a proximity sensor, and a motion sensor. Specifically, the light sensor may include an ambient light sensor and a proximity sensor. The ambient light sensor may adjust the brightness of the display panel according to the brightness of the ambient light. The proximity sensor may turn off the display panel and/or backlight when the electronic device 10 is moved near to the ear. As a type of motion sensor, the gravity acceleration sensor may detect the magnitude of acceleration in various directions (typically three axes), and may detect the magnitude and direction of gravity in a stationary state. The gravity acceleration sensor may be used for applications that identify the orientation of the mobile phone (such as switching between landscape mode and portrait mode, related games, and magnetometer calibration for orientation), vibration recognition functions (such as pedometer, and tapping), etc. The electronic device 10 may further be configured with sensors, such as a gyroscope, a barometer, a hygrometer, a thermometer, an infrared sensor, which will not be repeated here.

The audio circuit 506 may provide an audio interface between the user and the electronic device 10 through a speaker and a microphone. The audio circuit 506 may convert the received audio data into electrical signals, and transmits the electrical signals to the speaker. The speaker converts the electrical signals into sound signals for output. Furthermore, the microphone converts the collected sound signals into electrical signals, and the audio circuit 506 receives the electrical signals, and converts the electrical signals into audio data. The audio data is output to the processor 508 for processing, and then sent to another device, such as an electronic device 10 through the radio frequency circuit 501. Alternatively, the audio data is output to the memory 502 for further processing. The audio circuit 506 may further include a headphone jack, which is configured to provide communication between an external earphone and the electronic device 10.

Wireless Fidelity (Wi-Fi) is a short-range wireless communication technology. The electronic device 10, through the Wi-Fi module 507, enables the user to send and receive emails, browse the web, and access streaming media, which provides wireless broadband Internet access to the user. Although the Wi-Fi module 507 is illustrated in FIG. 11, it can be understood that the Wi-Fi module 507 is not an essential component of the electronic device 10 and may be omitted as needed without changing the scope of the invention.

The processor 508 is a control center of the electronic device 10, connecting various parts of the entire electronic device 10 through various interfaces and circuits. By running or executing applications stored in the memory 502 and accessing the data stored in the memory 502, the processor 508 implements various functions and processes data of the electronic device 10, thereby providing an overall monitor of the electronic device 10. In some alternative implementations, the processor 508 may include one or more processing cores. In some embodiments, the processor 508 may integrate an application processor and a modem processor, where the application processor is configured to primarily handle the operating system, user interface, and applications, and the modem processor is configured to primarily handle wireless communication. It can be understood that the modem processor may not be integrated into the processor 508.

The electronic device 10 further includes a power supply 509 that powers the various components. In some embodiments, the power supply 509 may be logically connected to the processor 508 through a power management system, thereby enabling the power management system to implement functions such as charging, discharging, and power consumption management. The power supply 509 may further include one or more direct current (DC) or alternating current (AC) power sources, one or more recharging systems, on or more power failure detection circuits, one or more power converters or inverters, one or more power status indicators, or any other components.

Although not illustrated in FIG. 11, the electronic device 10 may further include a Bluetooth module, which will not be repeated here. In practice, the various modules may be implemented as independent entities, or may be arbitrarily combined and implemented as the same or several entities. The specific implementations of these modules may refer to the above method embodiments, which will not be repeated here.

The various technical features of the above-described embodiments may be combined arbitrarily. To make the description concise, not all possible combinations of the various technical features in the embodiments are described. However, as long as there is no contradiction in the combination of these technical features, all combinations of these technical features should be considered to be within the scope of the specification.

The foregoing embodiments illustrates only several implementations of this disclosure and are described in detail, which however are not to be construed as a limitation to the scope of this disclosure. It is notable that, for those skilled in the art, several modifications and improvements can be made without departing from the idea of this disclosure, but all of them should fall within the protection scope of this disclosure. Therefore, the protection scope of the disclosure should be subject to the appended claims.

**Claims**

1. An optical system, wherein the optical system comprises three or four lenses with refractive power, and along an optical axis from an object side to an image side, the optical system sequentially comprises:

   a first lens with positive refractive power, wherein a paraxial region of an object-side surface of the first lens and a paraxial region of an image-side surface of the first lens are convex;
   a second lens with refractive power; and
   a third lens with refractive power, wherein one of the second lens and the third lens has positive refractive power, and the other one of the second lens and the third lens has negative refractive power;
   wherein the optical system satisfies following conditional expressions:

$$0.25 \leq f1/f \leq 0.85;$$

$$0.15 \leq |f2/f| \leq 0.45;$$

and

$$0.15 \leq |f3/f| \leq 1.25;$$

where f1 is a focal length of the first lens, f2 is a focal length of the second lens, and f3 is a focal length of the third lens.

2. The optical system of claim 1, wherein the optical system further comprises a fourth lens disposed on an image side of the third lens, and the fourth lens has positive refractive power.

3. The optical system of claim 2, wherein one of a paraxial region of an object-side surface and a paraxial region of an image-side surface of the fourth lens is convex, and the other one of the paraxial region of the object-side surface and the paraxial region of the image-side surface of the fourth lens is concave.

4. The optical system of any one of claims 1 to 3, wherein when the second lens has positive refractive power, a paraxial region of an object-side surface of the second lens and a paraxial region of an image-side surface of the second lens are convex; when the second lens has negative refractive power, the paraxial region of the object-side surface of the second lens and the paraxial region of the image-side surface of the second lens are concave; when the third lens has negative refractive power, a paraxial region of an object-side surface of the third lens and a paraxial region of an image-side surface of the third lens are concave; and when the third lens has positive refractive power, the paraxial region of the object-side surface of the third lens is convex.

5. The optical system of any one of claims 1 to 3, wherein the optical system satisfies a following conditional expression:

$$0.9 \leq f4/f \leq 1.2;$$

where f4 is a focal length of the fourth lens.

6. The optical system of any one of claims 1 to 3, wherein the optical system satisfies a following conditional expression:

$$0.145\text{mm}^{-1} \leq FNO/f \leq 0.195\text{mm}^{-1};$$

where FNO is f-number of the optical system.

7. The optical system of any one of claims 1 to 3, wherein the optical system satisfies a following conditional expression:

$$1.3 \leq TTL/f \leq 1.5;$$

where TTL is a distance on the optical axis from the object-side surface of the first lens to an imaging plane of the optical system.

8. A camera module, comprising an image sensor, an optical transmission element, and the optical system of any one of claims 1 to 7;
wherein the optical transmission element has a light-transmitting surface, the light-transmitting surface is provided with a light incident area and a light exiting area, the light incident area is opposite to the optical system, the light exiting area is opposite to the image sensor, the optical transmission element is configured to direct at least part of light incident on the light incident area to exit from the light exiting area after undergoing at least two reflections, and a photosensitive surface of the image sensor is perpendicular to an axis of the optical system.

9. The camera module of claim 8, wherein the optical transmission element further comprises a first reflecting surface and a second reflecting surface, both the first reflecting surface and the second reflecting surface are inclined relative to the light-transmitting surface, and the optical transmission element is configured to direct the light incident on the light incident area to exit from the light exiting area after being sequentially reflected by the first reflecting surface, the light-transmitting surface, and the second reflecting surface.

10. The camera module of claim 9, wherein the camera module satisfies a following conditional expression:

$$0.82 \leq E1/f \leq 1.6;$$

where E1 is a distance in an axial direction of the optical system between the light-transmitting surface and an intersection line of the first reflecting surface and the second reflecting surface, or a distance in the axial direction of the optical system between the light-transmitting surface and an intersection line of an extended surface of the first reflecting surface and an extended surface of the second reflecting surface, and H is a size of the optical system in the axial direction.

11. The camera module of claim 9, wherein the optical transmission element further comprises a bottom surface, the bottom surface is opposite to the light-transmitting surface and connected between the first reflecting surface and the second reflecting surface, and the camera module satisfies a following conditional expression:

$$0.7 \leq E2/E1 \leq 0.95;$$

where E2 is a distance in an axial direction of the optical system between the bottom surface and the light-transmitting surface, and E1 is a distance in the axial direction of the optical system between the light-transmitting surface and an intersection line of the first reflecting surface and the second reflecting surface, or a distance in the axial direction of the optical system between the light-transmitting surface and an intersection line of an extended surface of the first reflecting surface and an extended surface of the second reflecting surface.

12. The camera module of claim 9, wherein the camera module satisfies a following conditional expression:

$$0.4\text{mm}/° \leq C/\alpha 1 \leq 0.5 \text{ mm}/°;$$

where C is a thickness of the optical transmission element when being equivalent to a flat glass, and $\alpha 1$ is an included angle between the light-transmitting surface and the first reflecting surface.

13. The camera module of claim 9, wherein the camera module satisfies a following conditional expression:

$$3 \leq \alpha 2/\alpha 1 \leq 4.1;$$

where $\alpha 2$ is an included angle between the first reflecting surface and the second reflecting surface, and $\alpha 1$ is an included angle between the light-transmitting surface and the first reflecting surface.

14. An electronic device, comprising the camera module of any one of claims 8 to 13.

EP 4 726 454 A1

FIG. 1

FIG. 2

FIG. 3

FIG. 4

FIG. 5

FIG. 6

FIG. 7

——650 NM
— -610 NM
— — -555 NM
·········510 NM
— · - 470 NM
— ·· -435 NM
Longitudinal spherical
aberration

—— 555NM S (Sagittal)
— — 555NM T (Tangential)
Astigmation
Image height（mm）

————555NM
Distortion
Image height（mm）

Focus shift (mm)

Focus shift (mm)

Distortion (%)

FIG. 8

FIG. 9

650 NM
610 NM
555 NM
510 NM
470 NM
435 NM

Longitudinal spherical
aberration

— 555NM S (Sagittal)
– – 555NM T (Tangential)
Astigmation
Image height （mm）

555NM
Distortion
Image height （mm）

Focus shift (mm)

Focus shift (mm)

Distortion (%)

FIG. 10

10

FIG. 11

## INTERNATIONAL SEARCH REPORT

| International application No. |
| --- |
| **PCT/CN2024/136474** |

**A. CLASSIFICATION OF SUBJECT MATTER**

G02B13/00(2006.01)i

According to International Patent Classification (IPC) or to both national classification and IPC

**B. FIELDS SEARCHED**

Minimum documentation searched (classification system followed by classification symbols)

IPC:G02B13

Documentation searched other than minimum documentation to the extent that such documents are included in the fields searched

Electronic data base consulted during the international search (name of data base and, where practicable, search terms used)

CNTXT: ENTXTC; ENTXT; VEN: 透镜, 镜头, 第三, 第四, 三片, 四片, 长焦, 棱镜, 全反射, 潜望, lens+, third, fourth, three, four, long focal, prism, reflect+, periscope.

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117608055 A (GUANGDONG OPPO MOBILE TELECOMMUNICATIONS CORP., LTD.) 27 February 2024 (2024-02-27) <br> description, paragraphs [0003]-[0133], and figures 1-11 | 1-14 |
| X | JP 2005025034 A (MATSUSHITA ELECTRIC INDUSTRIAL CO., LTD.) 27 January 2005 (2005-01-27) <br> description, paragraphs [0038]-[0044], and figures 3-4 | 1, 4, 7 |
| Y | JP 2005025034 A (MATSUSHITA ELECTRIC INDUSTRIAL CO., LTD.) 27 January 2005 (2005-01-27) <br> description, paragraphs [0038]-[0044], and figures 3-4 | 8-9, 14 |
| X | CN 105319700 A (FUJIFILM CORP.) 10 February 2016 (2016-02-10) <br> description, paragraphs [0094]-[0104], and figures 2, 7, and 8 | 1-5, 7 |
| Y | CN 105319700 A (FUJIFILM CORP.) 10 February 2016 (2016-02-10) <br> description, paragraphs [0094]-[0104], and figures 2, 7, and 8 | 8-9, 14 |
| Y | CN 115327743 A (KUNSHAN QTECH MICROELECTRONICS CO., LTD.) 11 November 2022 (2022-11-11) <br> description, paragraphs [0044]-[0055] and [110]-[127], and figures 1 and 22-25 | 8-9, 14 |

☑ Further documents are listed in the continuation of Box C.    ☑ See patent family annex.

| | |
| --- | --- |
| *   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **21 January 2025** | **01 March 2025** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/136474** |

### C.  DOCUMENTS CONSIDERED TO BE RELEVANT

| Category* | Citation of document, with indication, where appropriate, of the relevant passages | Relevant to claim No. |
|---|---|---|
| X | JP 2008076594 A (FUJINON CORP.) 03 April 2008 (2008-04-03) description, paragraphs [0014]-[0044], and figure 2 | 1, 4 |
| X | JP H08190049 A (RICOH KK) 23 July 1996 (1996-07-23) description, paragraph [0035], and figure 1 | 1, 4 |
| X | JP H09288235 A (FUJI PHOTO FILM CO., LTD.) 04 November 1997 (1997-11-04) description, paragraphs [0017]-[024], and figure 1 | 1, 4 |
| X | CN 113075782 A (JIANGXI JINGCHAO OPTICAL CO., LTD.) 06 July 2021 (2021-07-06) description, paragraphs [0171]-[0188], and figures 9-10 | 1-4, 7 |
| X | JP 2021081640 A (CANON KK) 27 May 2021 (2021-05-27) description, paragraphs [0049]-[0050], and figures 7-8 | 1-4, 7 |
| A | CN 111929818 A (AAC ACOUSTIC TECHNOLOGIES (SUZHOU) CO., LTD.) 13 November 2020 (2020-11-13) entire document | 1-14 |
| A | CN 1766690 A (TSINGHUA UNIVERSITY et al.) 03 May 2006 (2006-05-03) entire document | 1-14 |
| A | JP 2007178689 A (KYOCERA CORP.) 12 July 2007 (2007-07-12) entire document | 1-14 |
| A | JP 2008052233 A (FUJINON CORP.) 06 March 2008 (2008-03-06) entire document | 1-14 |

Form PCT/ISA/210 (second sheet) (July 2022)

## INTERNATIONAL SEARCH REPORT
### Information on patent family members

International application No.

**PCT/CN2024/136474**

| Patent document cited in search report | | | Publication date (day/month/year) | Patent family member(s) | | | Publication date (day/month/year) |
|---|---|---|---|---|---|---|---|
| CN | 117608055 | A | 27 February 2024 | CN | 117608055 | B | 21 June 2024 |
| JP | 2005025034 | A | 27 January 2005 | JP | 4487506 | B2 | 23 June 2010 |
| CN | 105319700 | A | 10 February 2016 | JP | 2016001209 | A | 07 January 2016 |
| | | | | US | 2015362720 | A1 | 17 December 2015 |
| | | | | US | 9678328 | B2 | 13 June 2017 |
| CN | 115327743 | A | 11 November 2022 | CN | 218272884 | U | 10 January 2023 |
| | | | | CN | 219370036 | U | 18 July 2023 |
| | | | | CN | 219370111 | U | 18 July 2023 |
| JP | 2008076594 | A | 03 April 2008 | None | | | |
| JP | H08190049 | A | 23 July 1996 | None | | | |
| JP | H09288235 | A | 04 November 1997 | JP | 3588517 | B2 | 10 November 2004 |
| CN | 113075782 | A | 06 July 2021 | None | | | |
| JP | 2021081640 | A | 27 May 2021 | None | | | |
| CN | 111929818 | A | 13 November 2020 | CN | 111929818 | B | 25 May 2021 |
| | | | | JP | 7023344 | B1 | 21 February 2022 |
| | | | | US | 2022066141 | A1 | 03 March 2022 |
| | | | | WO | 2022047991 | A1 | 10 March 2022 |
| | | | | JP | 2022042462 | A | 14 March 2022 |
| | | | | US | 11366292 | B2 | 21 June 2022 |
| CN | 1766690 | A | 03 May 2006 | JP | 2006126792 | A | 18 May 2006 |
| | | | | US | 2006092529 | A1 | 04 May 2006 |
| | | | | US | 7239458 | B2 | 03 July 2007 |
| | | | | CN | 100462770 | C | 18 February 2009 |
| JP | 2007178689 | A | 12 July 2007 | None | | | |
| JP | 2008052233 | A | 06 March 2008 | EP | 1840617 | A2 | 03 October 2007 |
| | | | | EP | 1840617 | A3 | 28 September 2011 |
| | | | | JP | 4937693 | B2 | 23 May 2012 |
| | | | | US | 2007229981 | A1 | 04 October 2007 |
| | | | | US | 7295384 | B1 | 13 November 2007 |
| | | | | CN | 101046546 | A | 03 October 2007 |
| | | | | CN | 100470292 | C | 18 March 2009 |

Form PCT/ISA/210 (patent family annex) (July 2022)

REFERENCES CITED IN THE DESCRIPTION

**Patent documents cited in the description**

- CN 2023117294355